# DEMANDE DE BREVET EUROPEEN

(11) **EP 0 655 491 A1**
(43) Date de publication de la demande: **31.05.1995**
(21) Numéro de dépôt: 94402626.9
(22) Date de dépôt: 18.11.1994
(51) Int. Cl.: C09K 3/32, B01J 20/24, A01K 1/015

(54) **Produit absorbant biodégradable à usage industriel à base d'anas de lin et d'un agent liant**

(30) Priorité: 19.11.1993 FR 9313899
(71) Demandeur: Lamerant, Philippe, F-27110 Le Neubourg (FR)
(72) Inventeur: Lamerant, Philippe, F-27110 Le Neubourg (FR)
(74) Mandataire: Stalla-Bourdillon, Bernard

(57) **Abrégé**

Produit absorbant biodégradable à usage industriel.

Ce produit absorbant se présente sous forme de miettes, de densité comprise entre 0,3 et 0,4 g/cm³, et est constitué d'anas de lin et d'un agent liant sous forme d'un mélange d'au moins une graisse animale et d'un lignosulfonate.

Ce produit permet d'obtenir une excellente absorption, une utilisation prolongée et une facilité de récupération.

## Description

La présente invention a pour objet un produit absorbant biodégradable constitué d'anas de lin et d'un agent liant composé de substances d'origine naturelle, ce produit étant plus particulièrement destiné à l'absorption de liquides industriels résiduels.

Des résidus de nature ligno-cellulosique sont utilisés depuis de nombreuses années pour absorber de tels liquides.

Parmi ceux-ci, on peut citer la sciure de bois dont le faible coût en a fait un produit avantageux. Toutefois, celui-ci s'est avéré insuffisamment absorbant et provoque en outre, en raison de sa faible granulométrie, la formation de poussières indésirables lors de son utilisation, ce qui présente certains inconvénients notamment à l'égard de l'environnement immédiat du manipulateur.

On peut également citer l'utilisation, décrite dans la demande de brevet GB 2.136.263, de granulés réalisés à partir de sciure ou de copeaux de bois en association avec un liant lipidique pour former une litière pour animaux. Ce mode de présentation réalisable grâce à l'addition d'un liant a pour rôle d'éviter que la litière ne colle aux pattes des animaux. Cependant lorsque celle-ci est souillée, les granulés se délitent, ce qui nécessite par conséquent des précautions de manipulations importantes pour sa récupération et son élimination sans dispersion de poussières indésirables. De telles précautions sont bien entendu inenvisageables dans un cadre industriel.

Il a par ailleurs été proposé dans la demande de brevet EP 022.010 d'utiliser des sous-produits bruts de cannabinacées et en particulier du chanvre pour réaliser des litières pour animaux. En raison de la présence d'une grande quantité de poussière, les litières obtenues n'ont pas été jugées très satisfaisantes.

Après de nombreuses études, on a constaté que les anas de lin, c'est-à-dire les résidus de tige de lin obtenus après extraction des fibres textiles de lin, présentent un fort pouvoir d'absorption. Cependant, leur utilisation et en particulier leur compactage sont rendus difficiles par la présence de particules de silice entraînées lors du ramassage après rouissage, le rouissage étant nécessaire à la transformation du lin afin d'en extraire les fibres utilisées dans l'industrie textile.

En vue de surmonter cette difficulté, il a été proposé dans la demande de brevet FR 8501205 (2.576.524), l'utilisation de soude caustique comme agent liant pour former un produit absorbant sous forme de miettes, à base d'anas de lin. Ce produit qui présente un pouvoir absorbant en eau, mesuré selon la méthode "Westinghouse", compris entre 190 et 210 % en poids par rapport au poids du produit et en huile de coupe, c'est-à-dire un mélange huile-eau, mesuré selon la même méthode, compris entre 200 et 220 % est difficilement éliminable en raison de la présence de soude caustique de telle sorte que ce produit ne peut bien entendu être considéré comme biodégradable.

Pour des raisons écologiques, la tendance actuelle consiste à limiter la quantité des déchets non biodégradables. Il était donc particulièrement souhaitable de pouvoir disposer d'un produit présentant de bonnes propriétés mécaniques et ayant un bon pouvoir d'absorption tout en étant également biodégradable.

On a maintenant constaté de façon surprenante et inattendue qu'il était possible d'obtenir un excellent produit absorbant biodégradable à partir d'anas de lin et d'un mélange d'au moins une graisse animale et d'un lignosulfonate en tant qu'agent liant.

L'utilisation d'anas de lin et de cet agent liant particulier permet d'obtenir un absorbant industriel qui sous forme de miettes présente de très nombreux avantages, à savoir :
1°) une excellente absorption, le pouvoir absorbant en eau étant compris entre 270 et 300 % en poids et celui en huile de coupe étant compris entre 290 et 310 % en poids, mesurés selon la méthode "Westinghouse",
2°) l'absence de libération de poussière lors de sa manipulation avant et après usage,
3°) une sécurité d'emploi, les miettes présentant à la fois une souplesse et une capacité d'accroche sur le sol évitant tout risque d'accident pour le manipulateur,
4°) un coût réduit de fabrication, les anas de lin, la graisse animale et le lignosulfonate étant respectivement des sous-produits des industries textile, alimentaire et papetière,
5°) une utilisation prolongée et une facilité de récupération, le produit après absorption ne se délitant pas, dans la mesure où la structure des anas de lin est conservée au sein des miettes, et
6°) une facilité d'élimination soit naturellement par ses propriétés biodégradables, soit lorsqu'il a été imprégné d'huiles par combustion ce qui en fait en outre une source d'énergie.

La présente invention a donc pour objet un produit absorbant biodégradable à usage industriel, se présentant sous forme de miettes de densité comprise entre environ 0,3 et 0,4 g/cm³, et est constitué d'anas de lin et d'un agent liant sous forme d'un mélange d'au moins une graisse animale et de lignosulfonate.

Du fait de sa densité, le produit absorbant selon l'invention, présente à la fois une division suffisamment importante pour augmenter la surface de contact avec le produit à absorber et lui procurer ainsi un pouvoir absorbant élevé et une masse volumique suffisamment élevée pour réduire le volume occupé par ledit produit et donc faciliter son stockage.

Les anas de lin, comme ceci a été précisé précédemment, sont des résidus obtenus après extraction des fibres textiles du lin.

Le procédé conventionnel de transformation du lin consiste à récolter le lin, puis à le répartir en andains où il subit un début de pourriture appelé rouissage, permettant de faciliter le teillage ultérieur, c'est-à-dire le traitement mécanique nécessaire à la séparation d'une part des fibres courtes et longues appelées respectivement étoupes et filasses utilisées dans l'industrie textile, et d'autre part de la partie ligneuse appelée paille ou anas.

Des anas ainsi obtenus, on sélectionne de préférence pour réaliser l'absorbant selon l'invention, ceux présentant une longueur moyenne comprise entre 2 et 15 mm.

On utilise en outre de préférence des anas de lin dont le taux d'humidité est compris entre environ 10 % et 15 % et de préférence entre 11 % et 12 %.

Bien entendu, ce taux d'humidité peut être éventuellement obtenu soit par séchage soit par humidification des anas.

La graisse animale utilisée est une graisse de type conventionnel. Pour des raisons de coût évidentes, elle provient généralement de déchets de l'industrie bouchère.

On utilise de préférence selon l'invention une graisse animale dont le taux d'acidité oléique est inférieur ou égal à 15 %.

Etant donné que la graisse est additionnée aux anas de lin sous forme liquide donc après chauffage, elle est choisie de préférence pour des raisons économiques parmi les graisses à bas point de fusion c'est-à-dire compris entre 30°C et 46°C.

Parmi ces graisses, on peut citer notamment les graisses issues de l'industrie bouchère obtenues à partir du boeuf, du mouton, du porc ou de la volaille, par pressage ou par extraction à l'aide de solvant des carcasses et/ou des déchets d'abattage. De telles graisses sont notamment commercialisées par la Société Sanofi.

La proportion en graisse animale présente dans l'absorbant selon l'invention, est avantageusement comprise entre 0,5 % et 3 %, et de préférence d'environ 1 % en poids par rapport au poids total de l'absorbant.

La présence de graisse animale dans l'absorbant selon l'invention permet en outre d'améliorer la rétention des déchets absorbés, notamment des hydrocarbures.

Le lignosulfonate utilisé est un sous-produit de l'industrie de la cellulose, par exemple notamment de l'industrie papetière. Il peut être utilisé à l'état liquide ou solide sous forme de poudre et se transforme en colle en présence de vapeur d'eau.

Comme lignosulfonates utilisables selon l'invention, on peut citer notamment le lignosulfonate ammoniocalcique tel que celui commercialisé sous la dénomination de "C12 AB" par la Société Sanofi, le lignosulfonate magnésiocalcique tel que celui commercialisé sous la dénomination de "Narlisuc NK" par la Société Sanofi, le lignosulfonate de calcium tel que celui commercialisé sous la dénomination de "Naruvil" par la Société Sanofi et le lignosulfonate d'ammonium tel que celui commercialisé sous la dénomination de "Naruzel" également par la Société Sanofi.

La proportion en lignosulfonate présente dans le produit absorbant selon l'invention, est avantageusement comprise entre 1 % et 3 % et de préférence d'environ 1,5 % en poids par rapport au poids total de l'absorbant.

L'agent liant ainsi défini confère au produit absorbant sous forme de miettes une densité et une cohésion permettant d'allier à un bon pouvoir d'absorption une facilité d'utilisation. Par ailleurs, l'agent liant permet une lubrification des filières annulaires à travers lesquelles sont formés des granulés sous forme de petits cylindres, ce qui facilite leur préparation.

Selon un mode de réalisation préféré le produit absorbant biodégradable selon l'invention, se présente sous forme de miettes ayant une granulométrie moyenne comprise entre environ 2 et 10 mm.

Il présente en outre un taux d'humidité compris entre 8 % et 12 %.

Le procédé de préparation du produit absorbant selon l'invention comprend les étapes suivantes :
- élimination des poussières et calibrage des anas par tamisage progressif, c'est-à-dire dans un premier temps à l'aide de cribles cylindriques puis dans un deuxième temps à l'aide de cribles circulaires, les anas obtenus ayant une longueur comprise entre 2 et 15 mm et étant sensiblement exempts de poussière,
- granulation avec adjonction de l'agent liant dans un mélangeur puis passage dans une presse à filière annulaire,
- refroidissement des granulés obtenus sous forme de petits cylindres,
- émiettage à l'aide d'un émietteur à rouleaux cannelés des granulés, puis
- criblage des miettes.

L'adjonction de l'agent liant dans le mélangeur est destinée à contrôler la densité et la cohésion des granulés puis ultérieurement celles des miettes ainsi qu'à lubrifier la filière comme ceci a été précisé ci-dessus.

Avant son introduction dans le mélangeur, la graisse est chauffée jusqu'à l'obtention d'une masse liquide peu visqueuse pour permettre une bonne répartition dans le mélangeur et une imprégnation homogène des anas de lin.

Le lignosulfonate qui peut être sous forme de poudre ou d'une solution aqueuse est introduit sans traitement préalable dans le mélangeur. Il peut être également vaporisé sur les anas de lin avant leur introduction dans le mélangeur, lorsqu'il se présente sous forme d'une solution.

La presse à filière annulaire utilisée pour la granulation du produit absorbant selon l'invention, possède une longueur de compression comprise entre 40 et 45 mm et un rapport de compression de 11. Il se produit lors de la compression, un échauffement ayant pour effet de vaporiser une partie de l'eau présente dans les anas ce qui permet ainsi la transformation du lignosulfonate en colle assurant une excellente liaison entre les anas de lin.

Le procédé décrit précédemment diffère des méthodes connues de préparation des produits absorbants sous forme de miettes et en particulier de celle décrite dans la demande de brevet FR 8501205, par l'absence d'une étape de broyage, préservant ainsi la structure des anas.

Le produit absorbant selon l'invention obtenu après criblage est totalement biodégradable et homogène, ne se délite pas et ceci même après absorption de produits liquides qu'ils soient du type aqueux ou huileux.

On va maintenant donner à titre d'illustration un exemple de réalisation du produit absorbant selon l'invention.

### EXEMPLE:

On introduit 100 kg d'anas de lin brut de taille moyenne comprise entre 2 et 40 mm dans un crible cylindrique de mailles rondes de 0,8 mm.

On récupère les anas ainsi débarrassés des poussières et des bourres initiales, puis les introduit dans un crible circulaire oscillant présentant une succession de grilles de mailles de 1,6 mm puis de 0,6 mm. On récupère alors 80 kg d'anas de lin exempts de poussière et ayant une taille moyenne comprise entre 2 et 15 mm.

On mesure alors leur taux d'humidité et si nécessaire l'ajuste de façon appropriée à environ 11 %.

Dans un mélangeur de type Promill relié à un dispositif comprenant un système de vaporisation et un bloc chauffant on introduit 100 kg d'anas de lin tels qu'obtenus ci-dessus, 1,5 kg de lignosulfonate commercialisé sous la dénomination de "C12 AB" par la Société Sanofi puis, par vaporisation, 1 kg de graisse animale préalablement chauffée à 40°C.

Après 5 minutes, les anas de lin imprégnés obtenus sont introduits dans une presse à filière annulaire du type CPM Promill dont la longueur de compression est de 40 à 45 mm et le rapport de compression est de 11.

On récupère alors le produit absorbant sous forme de petits cylindres que l'on refroidit à température ambiante, puis les introduit dans un émietteur à rouleaux cannelés de type classique.

Après criblage sur un tamis de mailles comprises entre 1,8 et 6 mm, on recueille un produit absorbant sous forme de miettes présentant les caractéristiques suivantes :
- Granulométrie moyenne : 2 à 5 mm
- Densité : 0,35 g/cm³
- Taux d'humidité : 9,92 %
- Pouvoir absorbant mesuré selon la méthode "Westinghouse" :
   . En eau : 276 %
   . En huile de coupe : 304 %

Le produit absorbant obtenu est très efficace, aisément manipulable et conserve après utilisation une excellente cohésion.

## Revendications

1. Produit absorbant biodégradable à usage industriel, caractérisé par le fait qu'il se présente sous forme de miettes, de densité comprise entre environ 0,3 et 0,4 g/cm³, et est constitué d'anas de lin et d'un agent liant sous forme d'un mélange d'au moins une graisse animale et d'un lignosulfonate.

2. Produit absorbant selon la revendication 1, caractérisé par le fait que la granulométrie moyenne des miettes est comprise entre environ 2 et 10 mm.

3. Produit absorbant selon l'une quelconque des revendications précédentes, caractérisé par le fait que le taux d'humidité dudit produit est compris entre environ 8 % et 12 %.

4. Produit absorbant selon l'une quelconque des revendications précédentes, caractérisé par le fait que la graisse animale présente une acidité oléique inférieure ou égale à 15 %.

5. Produit absorbant selon l'une quelconque des revendications précédentes, caractérisé par le fait que la graisse animale présente un point de fusion compris entre 30°C et 46°C.

6. Produit absorbant selon l'une quelconque des revendications précédentes, caractérisé par le fait que ladite graisse animale est présente en une proportion comprise entre 0,5 % et 3 % en poids par rapport au poids total de l'absorbant.

7. Produit absorbant selon l'une quelconque des revendications précédentes, caractérisé par le fait que le lignosulfonate est choisi parmi le lignosulfonate ammoniocalcique, le lignosulfonate magnésiocalcique, le lignosulfonate de calcium et le lignosulfonate d'ammonium.

8. Produit absorbant selon l'une quelconque des revendications précédentes, caractérisé par le fait que le lignosulfonate est présent en une proportion comprise entre environ 1 % et 3 % en poids par rapport au poids total de l'absorbant.
